# EUROPEAN PATENT APPLICATION

(11) **EP 3 269 598 A1**
(43) Date of publication of application: **17.01.2018**
(21) Application number: 16205311.0
(22) Date of filing: 20.12.2016
(51) Int. Cl.: B60Q 1/26, B60Q 1/38, B60Q 11/00, F21S 8/10

(54) **OUTER REARVIEW MIRROR AND LIGHT GUIDED SIDE TURNING LAMP STRUCTURE OF AUTOMOBILE WITH FLOW LAMP FUNCTION**

(30) Priority: 11.07.2016 CN 201620724828 U
(71) Applicant: Magna Mirrors (Taicang) Automotive Technology Co., Ltd., Jiangsu 215400 (CN)
(72) Inventor: MI, Zhenxing, Jiangsu, 215400 (CN); LU, Jungfeng, Jiangsu, 215400 (CN); WU, Anmin, Jiangsu, 215400 (CN)
(74) Representative: dompatent von Kreisler Selting Werner - Partnerschaft von Patent- und Rechtsanwälten mbB

(57) **Abstract**

This invention relates to an outer rearview mirror and light guided side turning lamp structure of automobile with flow lamp function, which comprising light source of side turning lamp (5), a light source of flow lamp (6) and a power drive assembly, the light source of side turning lamp and light source of flow lamp both connect with the power drive assembly, and the power drive assembly comprises a power circuit module (8), a control circuit module (9), a drive circuit module of side turning lamp (10) and a drive circuit module of flow lamp (11), and the power circuit module simultaneously connects with the drive circuit module of side turning lamp and drive circuit module of flow lamp by the control circuit module. Employing this kind of the outer rearview mirror and light guided side turning lamp structure of automobile added the flow lamp function on the basis of the satisfactory of the regulatory requirements, and different degrees of brightness change of the light source of flow lamp to form the personalized and artistic light effect, and the control methods of the side turning lamp with flow lamp are in concert with the conventional side turning lamp, it's easy to replacing, also suitable for widely marketing.

## Description

### FIELD OF THE INVENTION

The invention generally relates to the technical field of automobile parts, especially to the technical field of automobile's side turning lamp, in particular to an outer rearview mirror and light guided side turning lamp structure of automobile with flow lamp function.

### BACKGROUND OF THE INVENTION

The outer rearview mirror with light guided side turning lamp of automobile is increasing on the present market with the aim of providing warning and caution to the rear drivers and pedestrians. As to the existing outer rearview mirror and side turning lamp structure of automobile, the controlling of the brightness of the light source is crude and the light effect is monotonous, and it is difficult to satisfy the needs of personalization.

### SUMMARY OF THE INVENTION

The aim of this invention is to overcome the deficiencies the existing technology mentioned-above comprised, and to provide an outer rearview mirror and light guided side turning lamp structure of automobile with flow lamp function that permitting both satisfying the side turning lamp regulatory requirements and increasing the personalized flow lamp with different time intervals and different degrees of brightness change effects which had this structure wider applied.

In order to realize the above aims, this invention comprising:
The outer rearview mirror and light guided side turning lamp structure of automobile with flow lamp function, the structure comprising a light guided mask ,a light source of side turning lamp, a light source of flow lamp and a power drive assembly, the light source of side turning lamp and the light source of flow lamp both connect with the power drive assembly, the light source of side turning lamp, the light source of flow lamp and the power drive assembly are all set below the light guided mask.

Preferably, the light guided mask comprises integrated light guide and mask.

Preferably, the light guided mask is divided into separated light guide and separated mask.

Preferably, the power drive assembly comprises a power circuit module, a control circuit module, a drive circuit module of side turning lamp and a drive circuit module of flow lamp, and the power circuit module simultaneously connects with the drive circuit module of side turning lamp and the drive circuit module of flow lamp by the control circuit module, and the drive circuit module of side turning lamp and the drive circuit module of flow lamp connect with the light source of side turning lamp and the light source of flow lamp respectively.

Preferably, the drive circuit module of flow lamp comprises a PWM wave generating circuit.

Preferably, the structure also comprises an outer casing, and the light source of side turning lamp, the light source of flow lamp and the power drive assembly all set in a hollow space formed by the light guided mask and the outer casing.

Better, the power drive assembly is set on a breadboard, and the light source of side turning lamp and flow lamp light source both set on the breadboard, and the breadboard is fixed on the outer casing.

Furthermore, the breadboard is also provided with a voltage detection module, and the voltage detection module connects with the power drive assembly.

Furthermore, the breadboard is also provided with a backward voltage protection module, and the backward voltage protection module connects with the power drive assembly.

Furthermore, the structure further comprises a reflector, the reflector is set up between the light guided mask and the breadboard, and the reflector is welded to the outer casing.

Better, the outer casing is also provided with a breathable film.

Preferably, the light source of side turning lamp and/or flow lamp light source are/is LEDs.

Employing the outer rearview mirror and light guided side turning lamp structure of automobile with flow lamp in this invention, integrating the mask and light guide, the light guide cooperating with the light source of side turning lamp could meet the regulatory requirements, and the light guided mask and reflector cooperate with the different time intervals and different degrees of brightness of the light source of flow lamp to form the personalized and artistic light effect; the outer rearview mirror and light guided side turning lamp structure of automobile with flow lamp in this invention is simple and easy to control, and the control methods are in concert with the conventional side turning lamp, it's easy to replacing, also suitable for widely marketing.

### BRIEF DESCRIPTION OF THE DRAWINGS

FIG. 1 is an exploded view of the outer rearview mirror and light guided side turning lamp structure of automobile with flow lamp function proposed by the present invention.
FIG. 2 is a structured flowchart of the breadboard of the outer rearview mirror and light guided side turning lamp structure of automobile with flow lamp function proposed by the present invention.

FIG. 3 is a structured flowchart of the assembled outer rearview mirror and light guided side turning lamp structure of automobile with flow lamp function proposed by the present invention.

### Illustration signs:

- 1: light guided mask
- 2: reflector
- 3: breadboard
- 4: outer casing
- 5: light source of side turning lamp
- 6: light source of flow lamp
- 7: input of power and control signal
- 8: power circuit module
- 9: control circuit module
- 10: drive circuit module of side turning lamp
- 11: drive circuit module of flow lamp

### DETAILED DESCRIPTION OF THE INVENTION

In order to understand the technical content of the present invention clearly, the present invention is further exemplified by reference to the following example.

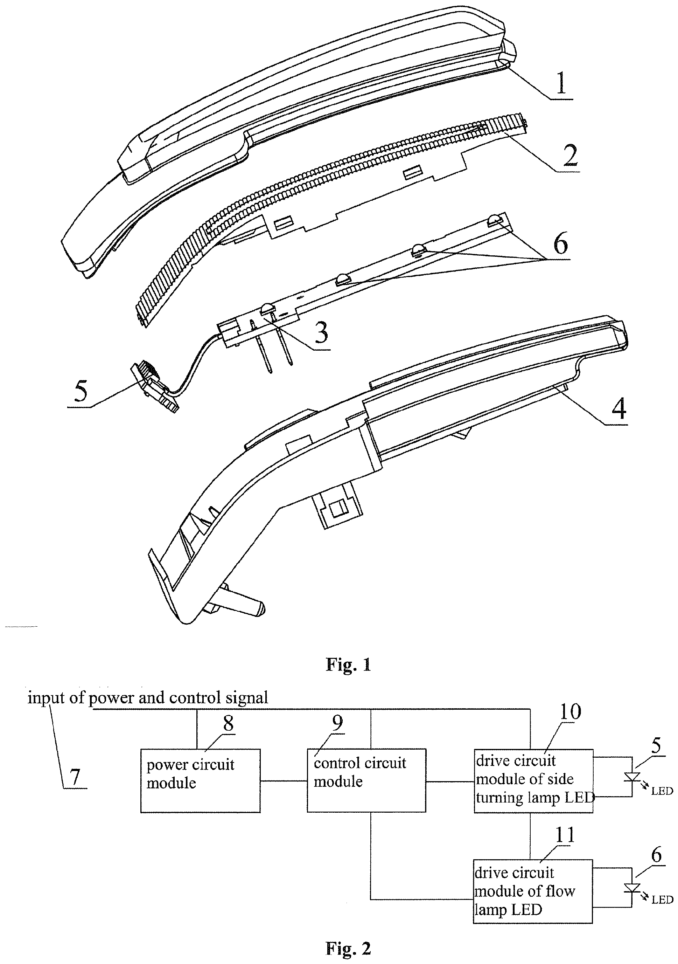

As shown in the FIG. 1, the outer rearview mirror and light guided side turning lamp structure of automobile with flow lamp function proposed by the present invention comprises a integrated light guided mask 1, a reflector 2, a breadboard 3, an outer casing 4, a light source of side turning lamp 5 and a light source of flow lamp 6, and the integrated light guided mask 1 is welded to outer casing 4.

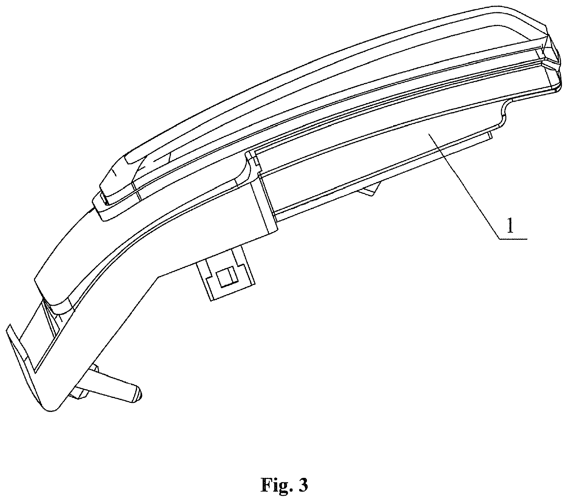

The breadboard 3 is assembled on the outer casing 4, reflector 2 is assembled on the outer casing 4 and covered the breadboard 3, and the integrated light guided mask 1 is welded to outer casing 4 to provide the assembly structure shown in FIG. 3. The light of the light source of side turning lamp 5 goes through the light guided mask 1 and is enhanced by the reflector 2 to provide the side turning function satisfied with the regulatory requirements.

The light of flow lamp light source 6 goes through the integrated light guided mask directly or goes through the integrated light guided mask 1 after reflected by the reflector to provide the artistic light effect, and the light source of flow lamp 6 is changed under the control of the control circuit module 9 and drive circuit module of flow lamp 11 in the breadboard 3 to personalized change the brightness of light source and to realize the flow lamp function.

The integrated light guided mask 1 integrates the light guide structure and integrates the mask with the light guide, simplified the assemble structure. Of course, the integrated light guided mask 1 could be separated into separated light guide and separated mask without affecting the realization of the function provided by outer rearview mirror and light guided side turning lamp structure of automobile with flow lamp function proposed by the present invention

Reflector 2 can receive and reflect the light of side turning lamp light source to enhance the light of side turning lamp, and can also receive and reflect the light of flow lamp light source that goes through the integrated light guided mask 1 to realize the artistic light effect, thus beautify the light effect of the flow lamp. Moreover the reflector 2 can cover the breadboard 3 avoiding the reveal thereof, thus increasing the artistic effect.

The outer casing 4 is provided with structure for assembling the breadboard 3 and reflector 2 and can be welded to the integrated light guided mask 1.

The assembly of outer rearview mirror and light guided side turning lamp structure of automobile with flow lamp function proposed by the present invention cannot be limited to comprise the light guided mask 1, the reflector 2, the breadboard 3 and the outer casing 4. Like removing the reflector 2, or separating the integrated light guided mask 1 to separated light guide and separated mask, or adding the breathable film to the outer casing 4 to enhance the radiating effect, or altering the assemble structure of breadboard 3 or reflector 2, the solutions mentioned-above as well as other similar solutions that can realize the outer rearview mirror and light guided side turning lamp structure of automobile with flow lamp function are included in the protection scope of the present invention.

As shown in the FIG. 2, the breadboard 3 structure of the outer rearview mirror and light guided side turning lamp structure of automobile with flow lamp function proposed by the present invention comprises the light source of side turning lamp 5, the light source of flow lamp 6, the input of power and control signal 7, the power circuit module 8, the control circuit module 9, the drive circuit module of side turning lamp 10 and the drive circuit module of flow lamp 11.

The control circuit module 9 on the breadboard 3 controls the drive circuit module of side turning lamp 10 and drive circuit module of flow lamp 11 respectively, and then the brightness of the light source of side turning lamp 5 is controlled by the drive circuit module of side turning lamp 10, and the brightness of flow lamp light source 6 is controlled by the drive circuit module of flow lamp 11. Namely the drive circuit module of side turning lamp 10 can light on/off the light source of side turning lamp 5 and the drive circuit module of flow lamp 11 can light on/off the light source of flow lamp 6. The control circuit module 9 consists of single chip or microprocessor and peripheral circuit, or consisted by discrete components. Aforementioned drive circuit module of side turning lamp 10 or drive circuit module of flow lamp 11 can be directly controlled by the power and signal of input of power and control signal 7. The drive circuit module of flow lamp 11comprises the PWM wave generating circuit.

The breadboard 3 cannot be limited to comprise the light source of side turning lamp 5, the light source of flow lamp 6, the input of power and control signal 7, the power circuit module 8, the control circuit module 9, the drive circuit module of side turning lamp 10 and the drive circuit module of flow lamp 11. Like the control circuit module 9, drive circuit module of side turning lamp 10 and drive circuit module of flow lamp 11 can be moved outside of the outer rearview mirror and light guided side turning lamp structure of automobile with flow lamp function proposed by the present invention, or connecting with the light source of side turning lamp 5 and flow lamp light source 6 on the breadboard 3 by means of circuit group or other methods. This breadboard 3 can also add other modules such as voltage detection modules, backward voltage protection modules. The solutions mentioned-above as well as other similar solutions that can realize the brightness of the light source of side turning lamp 5 and the sequential variation of brightness of the light source of flow 6 are within the domain of the breadboard 3, and are included in the protection scope of the outer rearview mirror and side turning lamp structure of automobile with flow lamp function proposed by the present invention.

The light source of side turning lamp 5 can comprise one or more than one LED, in accordance with the conventional side turning lamp, and the brightness's changing meets the regulatory requirements.

The light source of flow lamp 6 can comprise one or more than one LED, and the LEDs can be horizontal arranged one or more lines or vertical arranged one or more lines. The light source of the conventional side turning lamp only realizes the unified changes of the brightness, while this light source of flow lamp 6 can realizes independent, personalize changes of brightness via a PMW wave, and this changes of brightness can be ordinal or reverse interval, or ordinal changing from middle to the flanks, or ordinal changing from the flank to the middle, can be slowly changed, or realizing the different distribution of light and dark of LEDs to form the artistic and personalization sculpts.

The structure of the input of power and control signal 7 can connect to the breadboard by connector, or connect to the breadboard by wiring harness or other similar connection modes. The input of power and control signal 7 can be the input of the power supply, or can be the input of power supply and control signal or other similar inputs.

In the technical solution of outer rearview mirror and light guided side turning lamp structure of automobile with flow lamp function of present invention, each functional equipment and module device it included can corresponding to the actual specific hardware circuit structure, herein these modules and cells can realized only by hardware circuit structure, automatically implementing the corresponding functions without assisting specific controlling software.

Employing the outer rearview mirror and side turning lamp structure of light guided automobile with flow lamp in this invention, and adding the flow lamp function on the basis of the satisfactory of the regulatory requirements, and different degrees of brightness of the light source of flow lamp 6 to form the personalized and artistic light effect, and the outer rearview mirror and side turning lamp structure of light guided automobile with flow lamp in this invention is simple and easy to control, and the control methods are in concert with the conventional side turning lamp, it's easy to replacing, also suitable for widely marketing.

In the present specification, the present invention has been described according to the particular embodiments. But it is obvious that these embodiments can be modified or changed without departure from the spirit and scope of the present invention. Therefore, the specification described above is exemplary only and not intended to be limiting.

## Claims

1. An outer rearview mirror and light guided side turning lamp structure of automobile with flow lamp function, the structure comprising a light guided mask ,a light source of the side turning lamp, a light source of flow lamp and a power drive assembly, the light source of side turning lamp and the light source of flow lamp both connect with the power drive assembly, the light source of side turning lamp, the light source of flow lamp and the power drive assembly are all set below the light guided mask.

2. An outer rearview mirror and light guided side turning lamp structure of automobile with flow lamp function according to claim 1, wherein the light guided mask comprises integrated light guide and mask.

3. An outer rearview mirror and light guided side turning lamp structure of automobile with flow lamp function according to claim 1, wherein the light guided mask is divided into separated light guide and separated mask.

4. An outer rearview mirror and light guided side turning lamp structure of automobile with flow lamp function according to claim 1, wherein the power drive assembly comprises a power circuit module, a control circuit module, a drive circuit module of side turning lamp and a drive circuit module of flow lamp, and the power circuit module simultaneously connects with the drive circuit module of side turning lamp and the drive circuit module of flow lamp by the control circuit module, and the drive circuit module of side turning lamp and the drive circuit module of flow lamp connect with the light source of side turning lamp and the light source of flow lamp respectively.

5. An outer rearview mirror and light guided side turning lamp structure of automobile with flow lamp function according to claim 4, wherein the drive circuit module of flow lamp comprises a PWM wave generating circuit.

6. An outer rearview mirror and light guided side turning lamp structure of automobile with flow lamp function according to claim 1, wherein the structure further comprises a outer casing, and the light source of side turning lamp, the light source of flow lamp and the power drive assembly all set in a hollow space formed by the light guided mask and the outer casing.

7. An outer rearview mirror and side turning lamp structure of automobile with flow lamp function according to claim 6, wherein the power drive assembly is set on a breadboard, and the light source of side turning lamp and the light source of flow lamp both set on the breadboard, and the breadboard is fixed on the outer casing.

8. An outer rearview mirror and light guided side turning lamp structure of automobile with flow lamp function according to claim 7, wherein the breadboard is also provided with a voltage detection module, and the voltage detection module connects with the power drive assembly.

9. An outer rearview mirror and light guided side turning lamp structure of automobile with flow lamp function according to claim 7, wherein the breadboard is also provided with a backward voltage protection module, and the backward voltage protection module connects with the power drive assembly.

10. An outer rearview mirror and light guided side turning lamp structure of automobile with flow lamp function according to claim 7, wherein the structure further comprises a reflector, the reflector is set up between the light guided mask and the breadboard, and the reflector is welded to the outer casing.

11. An outer rearview mirror and light guided side turning lamp structure of automobile with flow lamp function according to claim 6, wherein the outer casing is also provided with a breathable film.

12. An outer rearview mirror and light guided side turning lamp structure of automobile with flow lamp function according to claim 1, wherein the light source of side turning lamp and/or flow lamp light source are/is LEDs.
